# EUROPÄISCHE PATENTSCHRIFT

(11) **EP 3 867 560 B1**
(45) Veröffentlichungstag und Bekanntmachung des Hinweises auf die Patenterteilung: **01.03.2023**
(21) Anmeldenummer: 18833004.7
(22) Anmeldetag: 17.12.2018
(51) Int. Cl.: F16P 3/14

(54) **VERFAHREN ZUM ANPASSEN EINER SCHUTZFUNKTION WÄHREND EINES BETRIEBS EINER MASCHINE DURCH ERZEUGEN EINES UNÜBERWACHTEN FENSTERBEREICHS MIT NICHT TRENNENDEN SCHUTZEINRICHTUNGEN SOWIE SCHUTZVORRICHTUNG**
METHOD FOR ADJUSTING A PROTECTIVE FUNCTION DURING OPERATION OF A MACHINE BY GENERATING AN UNMONITORED WINDOW REGION HAVING PROTECTIVE DEVICES, AND PROTECTIVE APPARATUS
PROCÉDÉ SERVANT À ADAPTER UNE FONCTION DE PROTECTION PENDANT UN FONCTIONNEMENT D'UNE MACHINE EN GÉNÉRANT UNE ZONE DE FENÊTRE NON SURVEILLÉE AVEC DES SYSTÈMES DE PROTECTION SANS SÉPARATION, ET DISPOSITIF DE PROTECTION

(43) Veröffentlichungstag der Anmeldung: 25.08.2021
(73) Patentinhaber: Siemens Aktiengesellschaft, 80333 München (DE)
(72) Erfinder: BÄR, Felix, 90461 Nürnberg (DE); GRAF, Rene, 90513 Zirndorf (DE); GROSS, Ralf, 90489 Nürnberg (DE); LOSKYLL, Matthias, 92318 Neumarkt (DE)
(86) Internationale Anmeldenummer: PCT/EP2018/085273
(87) Internationale Veröffentlichungsnummer: WO 2020/125930

(56) Entgegenhaltungen:
- DE-T2- 60 309 362

## Beschreibung

Die vorliegende Erfindung betrifft ein Verfahren zum Anpassen einer Schutzfunktion während eines Betriebs einer Maschine, bei welchem mittels einer Mehrzahl von nicht trennenden Schutzeinrichtungen ein Übergangsbereich überwacht wird, wobei der Übergangsbereich zwischen einem Gefahrenbereich, in welchem mit der Maschine eine gefahrbringende Bewegung durchgeführt wird, und einem Umgebungsbereich angeordnet ist. Zudem betrifft die vorliegende Erfindung eine Schutzvorrichtung zum Anpassen einer Schutzfunktion während eines Betriebs einer Maschine.

Ausgehend von einer Risikobeurteilung ergibt sich für eine Maschine der Gefahrenbereich als Bereich in der Maschine und/oder ihrem Umkreis, in dem die Sicherheit oder die Gesundheit einer Person gefährdet ist. Bei Risiken durch bewegliche Teile müssen die beweglichen Teile mit trennenden oder nicht trennenden Schutzeinrichtungen ausgestattet sein. Eine trennende Schutzeinrichtung ist ein Maschinenteil, welches Schutz mittels einer physischen Barriere bietet, beispielsweise ein Gitter, eine Tür oder dergleichen. Nicht trennende Schutzeinrichtungen sind Einrichtungen ohne trennende Funktion, die allein oder in Verbindung mit einer trennenden Schutzeinrichtung das Risiko vermindern. Solche nicht trennenden Schutzeinrichtungen können beispielsweise durch ein optisches System bereitgestellt werden. Bezogen auf Steuerungen müssen nicht trennende Schutzeinrichtungen uneingeschränkt funktionsfähig bleiben oder einen Befehl zum Stillsetzen auslösen.

Zur Bereitstellung der Schutzfunktion wird von nicht trennenden Schutzeinrichtungen ein überwachter Übergangsbereich aufgespannt, beispielsweise durch optische Systeme. Bei Verletzung des Übergangsbereichs durch ein eindringendes Objekt wird die gefahrbringende Bewegung der sicherheitskritischen Maschine abgeschaltet. Aus einem Eindringen in den Übergangsbereich ergibt sich dementsprechend eine Arbeitsunterbrechung der sicherheitskritischen Maschine, unabhängig davon, ob sich tatsächlich eine gefahrbringende Situation ergeben würde. Hieraus ergibt sich eine Produktivitätsminderung in der Kollaboration von Maschinen, welche durch nicht trennende Schutzeinrichtungen voneinander getrennt sind. Dies gilt insbesondere auch, falls eine der Maschinen nicht sicherheitskritisch ist. Beim Eindringen in den Übergangsbereich wird zudem nicht zwischen Personen und Maschinen unterschieden, sodass eine Koordination des Eindringens nicht durch eine gezielte Freigabe ermöglicht werden kann.

Durch gemeinsame, physische oder nicht-physische Einhausung der kollaborierenden Maschinen können die Arbeitsunterbrechungen, welche sich aus einem Eindringen in den zuvor vorhandenen Übergangsbereich ergeben haben, verhindert werden. Aus dem vergrößerten Schutzbereich ergibt sich allerdings auch eine Produktivitätsminderung. Zudem ist weiterhin keine Möglichkeit der Kollaboration mit Personen möglich, auch falls die Maschine, welche sich zuvor im Umgebungsbereich befunden hat, zur Mensch-Maschine-Kollaboration fähig ist und damit keine Überwachung durch eine zusätzliche Schutzeinrichtung erfordert.

Für spezielle Aufgaben, wie die Materialversorgung von Maschinen, können spezialisierte, physisch definierte, Schnittstellen verwendet werden. Diese Schnittstellen sind für den speziellen Anwendungsfall entwickelte Sonderlösungen. Daher ergibt sich bei Änderungen in der Funktionalität auch die Notwendigkeit einer mechanischen Anpassung.

Eine weitere Möglichkeit zur Umgehung der Arbeitsunterbrechungen ist der Einsatz einer Schleuse. Die Schleuse ersetzt in diesem Szenario die nicht trennende Schutzeinrichtung. Geöffnet wird jeweils nur auf einer Seite, um die Schutzfunktion weiter aufrecht zu erhalten. Im Schleusenbereich kann somit immer nur eine der kollaborierenden Maschinen operieren. Hieraus ergeben sich eine reduzierte Performance, erhöhter Platzbedarf sowie gegebenenfalls die Notwendigkeit einer zusätzlichen Mechanik für das Materialhandling.

Aus der DE 603 09 362 T2 ist bereits eine gattungsgemäße Einrichtung bekannt.

Es ist Aufgabe der vorliegenden Erfindung, eine Lösung aufzuzeigen, wie bei einem Bereitstellen einer Schutzfunktion während eines Betriebs einer sicherheitskritischen Maschine der Betrieb der Maschine effizienter durchgeführt werden kann, insbesondere im Hinblick auf eine Kollaboration mit einer nicht sicherheitskritischen Maschine.

Diese Aufgabe wird erfindungsgemäß durch ein Verfahren sowie durch eine Schutzvorrichtung mit den Merkmalen gemäß den unabhängigen Ansprüchen gelöst. Vorteilhafte Weiterbildungen sind in den abhängigen Ansprüchen angegeben.

Ein erfindungsgemäßes Verfahren dient zum Anpassen einer Schutzfunktion während eines Betriebs einer Maschine. Bei der Maschine handelt es sich insbesondere um eine sicherheitskritische Maschine. Bei dem Verfahren wird mittels einer Mehrzahl von nicht trennenden Schutzeinrichtungen ein Übergangsbereich überwacht, wobei der Übergangsbereich zwischen einem Gefahrenbereich, in welchem mit der Maschine eine gefahrbringende Bewegung durchgeführt wird, und einem Umgebungsbereich angeordnet ist. Dabei wird der Übergangsbereich mit ersten nicht trennenden Schutzeinrichtungen entlang von jeweiligen ersten Überwachungsrichtungen und unabhängig davon mit zweiten nicht trennenden Schutzeinrichtungen entlang von jeweiligen zweiten Überwachungsrichtungen überwacht. Hierbei werden zumindest eine der ersten nicht trennenden Schutzeinrichtungen und zumindest eine der zweiten nicht trennenden Schutzeinrichtungen derart zueinander angeordnet, dass die erste Überwachungsrichtung der zumindest einen ersten nicht trennenden Schutzeinrichtung und die zweite Überwachungsrichtung der zumindest einen zweiten nicht trennenden Schutzeinrichtung einen Schnittpunkt aufweisen.

Mithilfe des Verfahrens soll eine Schutzfunktion während des Betriebs der Maschine bereitgestellt werden. Bei der Maschine handelt es sich um eine sicherheitskritische Maschine. Im Betrieb kann sich die Maschine bewegen oder die Maschine kann Teile aufweisen, die sich bewegen. In dem Gefahrenbereich droht durch diese Bewegung eine Gefährdung der Sicherheit und/oder Gesundheit von Personen. Um diese Gefährdung zu verhindern, wird die Schutzfunktion bereitgestellt. Hierzu werden die nicht trennenden Schutzeinrichtungen verwendet. Mittels dieser nicht trennenden Schutzeinrichtungen wird der Übergangsbereich überwacht. Dieser Übergangsbereich trennt den Gefahrenbereich von dem Umgebungsbereich, in welchem keine Gefährdung durch die Maschine droht. Wenn ein Objekt, beispielsweise eine Person, in dem Übergangsbereich mittels der nicht trennenden Schutzeinrichtungen erkannt wird, wird die gefahrbringende Bewegung der Maschine gestoppt. Gemäß der Erfindung ist es nun vorgesehen, dass als die Mehrzahl von nicht trennenden Schutzeinrichtungen erste nicht trennende Schutzeinrichtungen und zweite nicht trennende Schutzeinrichtungen verwendet werden. Mit den jeweiligen nicht trennenden Schutzeinrichtungen wird der Übergangsbereich oder zumindest ein relevanter Teil davon überwacht. Dabei überwachen die nicht trennenden Schutzeinrichtungen den Übergangsbereich unabhängig voneinander und/oder redundant. Mit anderen Worten können also unabhängig operierende nicht trennende Schutzeinrichtungen verwendet werden. Mit den nicht trennenden Schutzeinrichtungen kann der Übergangsbereich aus verschiedenen Richtungen überwacht werden.

Die jeweiligen ersten nicht trennenden Schutzeinrichtungen können beispielsweise als optisches System oder als optische Sensoren ausgebildet sein. Die ersten nicht trennenden Schutzeinrichtungen können nach Art einer Lichtschranke ausgebildet sein oder einen Lichtvorhang bilden. Allgemein kann mit jeder der ersten nicht trennenden Schutzeinrichtungen eine Überwachung entlang der ersten Überwachungsrichtung durchgeführt werden. Beispielsweise kann mit den ersten nicht trennenden Schutzeinrichtungen jeweils eine Strahlung entlang der ersten Überwachungsrichtung ausgesendet werden. Durch eine Beeinflussung dieser Strahlung durch ein Objekt kann mittels der ersten nicht trennenden Schutzeinrichtung das Vorhandensein des Objekts erkannt werden. Dabei können die ersten Überwachungsrichtungen jeweils parallel zueinander verlaufen. Es kann auch vorgesehen sein, dass die ersten Überwachungsrichtungen voneinander verschieden sind. Die zweiten nicht trennenden Schutzeinrichtungen sind insbesondere baugleich zu den ersten nicht trennenden Schutzeinrichtungen ausgebildet. Vorliegend können die ersten nicht trennenden Schutzeinrichtungen und die zweiten nicht trennenden Schutzeinrichtungen so ausgestaltet und/oder zueinander angeordnet sein, dass die jeweiligen Vektoren der Überwachungsrichtungen nicht alle paarweise kollinear sind. Zumindest eine der ersten nicht trennenden Schutzeinrichtungen und zumindest eine der zweiten nicht trennenden Schutzeinrichtungen sind so ausgebildet beziehungsweise zueinander angeordnet, dass die erste Überwachungsrichtung der zumindest einen ersten nicht trennenden Schutzeinrichtung und die zweite Überwachungsrichtung der zumindest einen zweiten nicht trennenden Schutzeinrichtung einen Schnittpunkt aufweisen. Durch die Kombination der nicht trennenden Schutzeinrichtungen und die gleichzeitige Überwachung des Übergangsbereichs kann erreicht werden, dass nahezu jede geometrische Form ohne eine kritische Lückenbildung überwacht werden kann. Auf diese Weise kann die Schutzfunktion angepasst werden. Ferner kann der zu überwachende Übergangsbereichs flexibler gewählt werden und somit der Platzbedarf reduziert werden. Insgesamt kann der überwachte Betrieb der Maschine effizienter durchgeführt werden.

Erfindungsgemäß werden die zumindest eine erste nicht trennende Schutzeinrichtung und die zumindest eine zweite nicht trennende Schutzeinrichtung zum Erzeugen eines dem Schnittpunkt zugeordneten, unüberwachten Fensterbereichs deaktiviert. Wenn eine der nicht trennenden Schutzeinrichtungen deaktiviert wird, ergibt sich ein bezüglich dieser nicht trennenden Schutzeinrichtung unüberwachter Bereich, in dem kein Objekt erfasst werden kann. Der unüberwachte Bereich kann weiterhin durch eine weitere der nicht trennenden Schutzeinrichtungen in der jeweils anderen Überwachungsrichtung überwacht werden. Falls die zumindest eine erste nicht trennende Schutzeinrichtung und die zumindest eine zweite nicht trennende Schutzeinrichtung, bei denen die erste Überwachungsrichtung und die zweite Überwachungsrichtung den Schnittpunkt aufweisen, deaktiviert werden, kann der unüberwachte Fensterbereich erzeugt werden. Dieser Fensterbereich, welcher auch als Fenster bezeichnet werden kann, ist dem Schnittpunkt zugeordnet und ergibt sich aus der Überlagerung der unüberwachten Bereiche der Schutzeinrichtungen. Die Abmessungen des Fensterbereichs sind von der Anordnung und Ausgestaltung der nicht trennenden Schutzeinrichtungen abhängig. Solange nicht trennende Schutzeinrichtungen aktiv bleiben, ergibt sich die Möglichkeit des beliebigen Deaktivierens der redundanten nicht trennenden Schutzeinrichtungen, ohne dass die Überwachung des Übergangsbereichs insgesamt eingeschränkt wird. In diesem unüberwachten Fensterbereich kann beispielsweise der Maschine ein Eindringen in den beziehungsweise ein Durchdringen des Übergangsbereichs ermöglicht werden. Hierdurch kann sich beispielsweise eine weitere, nicht sicherheitskritische Maschine oder ein Teil davon in den Fensterbereich bewegen, ohne dass eine der nicht trennenden Schutzeinrichtungen auslöst und somit die Bewegung der sicherheitskritischen Maschine angehalten wird. Zudem können Wartungsarbeiten innerhalb des Gefahrenbereichs ohne eine Arbeitsunterbrechung der sicherheitskritischen Maschine ermöglicht werden. Hierdurch ergibt sich eine Erhöhung der Produktivität durch Verminderung der Arbeitsunterbrechungen der Maschine. Des Weiteren kann eine koordinierte Abschaltung der Schutzfunktion in bestimmten Bereichen eines bereits bestehenden Systems zur Bereitstellung der Schutzfunktion ermöglicht werden.

Erfindungsgemäß werden eine Mehrzahl der ersten nicht trennenden Schutzeinrichtungen und eine Mehrzahl der zweiten nicht trennenden Schutzeinrichtungen derart zueinander angeordnet, dass die ersten Überwachungsrichtungen der ersten nicht trennenden Schutzeinrichtungen und die zweiten Überwachungsrichtungen der zweiten nicht trennenden Schutzeinrichtungen jeweilige Schnittpunkte aufweisen. Bevorzugt können also mehrere erste nicht trennende Schutzeinrichtungen und mehrere zweite nicht trennende Schutzeinrichtungen vorgesehen sein, bei denen die Überwachungsrichtungen Schnittpunkte aufweisen. Hierbei ist insbesondere vorgesehen, dass durch ein gezieltes Deaktivieren und/oder Aktivieren der jeweiligen ersten nicht trennenden Schutzeinrichtungen und der jeweiligen zweiten nicht trennenden Schutzeinrichtungen eine Position und/oder Abmessungen eines den Schnittpunkten zugeordneten unüberwachten Fensterbereichs angepasst werden. Durch eine teilweise Deaktivierung der nicht trennenden Schutzeinrichtungen kombiniert mit den unterschiedlichen Überwachungsrichtungen ist es möglich, das nicht überwachte Fenster beliebiger Größe im Übergangsbereich zu erzeugen. Zudem können mehrere Fensterbereiche gleichzeitig in dem Übergangsbereich erzeugt werden. Die Möglichkeiten bezüglich der Formen und der Größe des Fensterbereichs hängen dabei von den genutzten nicht trennenden Schutzeinrichtungen sowie ihrer Anordnung ab.

Bevorzugt wird eine Bewegung einer weiteren, nicht sicherheitskritischen Maschine bestimmt und die Position und/oder die Abmessungen des unüberwachten Fensterbereichs werden fortlaufend in Abhängigkeit von der Bewegung angepasst. Mit anderen Worten kann eine Positionsinformation, welche die aktuelle Position der weiteren Maschine oder des Teils der weiteren Maschine beschreiben, bestimmt. Die Position und/oder die Abmessungen des unüberwachten Fensterbereichs können dann in Abhängigkeit von der Positionsinformation bestimmt werden. Die Positionsinformationen beziehen sich dabei auf den Teil der weiteren, nicht sicherheitskritischen Maschine, welcher sich im Übergangsbereich befindet. Ohne Beschränkung der Allgemeinheit wird im Folgenden angenommen, dass die Positionsinformationen sich auf das Koordinatensystem des Übergangsbereichs beziehen sowie die Größe des sich im Übergangsbereichs befindlichen Maschinenteils, ebenso bezogen auf das Koordinatensystem des Übergangsbereichs, beinhalten. Sollte dies nicht der Fall sein, so können die beschriebenen Informationen in das relevante Bezugssystem transformiert werden. Basierend auf diesen Informationen kann die Position sowie die Größe des Fensterbereichs berechnet werden, sodass eine Operation der weiteren Maschine im beziehungsweise durch den Übergangsbereich ohne Aktivierung einer der eingesetzten nicht trennenden Schutzeinrichtungen ermöglicht wird.

Bevorzugt werden die Position und/oder die Abmessungen des unüberwachten Fensterbereichs derart bestimmt, dass ein Operieren beziehungsweise eine Bewegung der weiteren Maschine durch den Übergangsbereich ermöglicht ist. Durch Koordination des Fensterbereichs mit der Bewegung der weiteren Maschine wird somit die Operation der weiteren Maschine durch den Übergangsbereich hindurch ermöglicht. Auf diese Weise kann der gleichzeitige Betreib der sicherheitskritischen Maschine und der weiteren, nicht sicherheitskritischen Maschine verbessert werden. Dies ermöglicht beispielsweise das Betreiben von modularen Anlagen inklusive kollaborativer Roboter. Des Weiteren ergibt sich eine verbesserte Kollaborationseffizienz und neue Kollaborationsmöglichkeiten durch Zugriffsmöglichkeit ohne Arbeitsunterbrechung sowie dynamischere Interfaces zur sicherheitskritischen Maschine durch die Anpassung der nicht überwachten Bereiche an die entsprechenden Bedürfnisse. Bei einer geeigneten Anordnung der nicht trennenden Schutzeinrichtungen kann das Fenster dabei in seiner Form und Größe so gestaltet werden, dass die notwendige Schutzstufe, beispielsweise ein Fingerschutz oder Handschutz, weiter gegeben ist.

Die beschriebene Koordination des Fensters beziehungsweise des Fensterbereichs mit den Maschinenbewegungen führt damit zu einer impliziten Unterscheidung zwischen Personen und Maschinen. Somit kann das Operieren der weiteren Maschine durch den Übergangsbereich ohne eine Arbeitsunterbrechung der sicherheitskritischen Maschine ermöglicht werden. Eine Erhöhung des Risikos der Gefährdung der Sicherheit oder Gesundheit von Personen kann über geeignete Wahl der Anordnung sowie Anzahl und Art der nicht trennenden Schutzeinrichtung vermieden werden.

In einer weiteren Ausführungsform wird zum Bestimmen der Bewegung der weiteren Maschine eine Trajektorie berechnet und/oder Bewegungsdaten, welche die Bewegung der weiteren Maschine beschreiben, werden von der weiteren Maschine bereitgestellt. Von der weiteren Maschine können die Bewegungsdaten, welche die Bewegung der weiteren Maschine oder des Teils der weiteren Maschine beschreiben, bereitgestellt werden. Diese Bewegungsdaten können als Grundlage für die Berechnung oder Simulation der Trajektorie dienen. Hierzu kann ein entsprechendes Simulationsprogramm, beispielsweise ein Robotersimulationsprogramm, verwendet werden. Durch eine Einbeziehung der nicht trennenden Schutzeinrichtungen in die Simulation beziehungsweise Berechnung der Trajektorien der Maschinenbewegungen kann die gemeinsame Bewegung der weiteren Maschine und des Fensters für definierte Operationen vorab festgelegt werden. Hieraus ergeben sich zu den entsprechenden Maschinentrajektorien passende Fenstertrajektorien, welche zeitabhängige Positionen und Größen des Fensters beinhalten. Durch synchrones Abspielen der Maschinentrajektorie mit der Fenstertrajektorie kann die Operation der weiteren Maschine durch den Übergangsbereich ermöglicht werden. Bei Abweichungen der Maschinenposition von der simulierten beziehungsweise berechneten Trajektorie verlässt die weitere Maschine das aktuell freigegebene Fenster und die nicht trennenden Schutzeinrichtungen lösen ihre Schutzfunktion aus. Eine Anpassung des Ablaufs an abweichende Geschwindigkeiten im realen Prozess ist mit entsprechenden zusätzlichen Informationen bezüglich der realen Geschwindigkeit möglich. Zusätzlich kann im Rahmen der benötigten Schutzstufe ein Skalierungsfaktor in die Simulation beziehungsweise Berechnung der Fenster eingefügt werden, um kleinere Abweichung der realen Maschinentrajektorie auszugleichen.

In einer weiteren Ausführungsform wird zum Bestimmen der Bewegung der weiteren Maschine die Bewegung der weiteren Maschine während einer initialen Lernphase mittels der ersten nicht trennenden Schutzeinrichtung und/oder der zweiten nicht trennenden Schutzeinrichtung beobachtet. Die benötigten Fenstertrajektorien können durch geeignete Beobachtung durch die nicht trennenden Schutzeinrichtungen oder anderer Vorrichtungen die den aufgespannten Übergangsbereich in geeigneter Weiße überwachen können, in der initialen Lernphase gelernt werden. Durch zusätzliche Meta-Daten können die gelernten Fenstertrajektorien gelabelt und im späteren, realen Prozessablauf aufgerufen werden. Hierzu kann die bestehende Funktionalität von nicht trennenden Schutzeinrichtungen dementsprechend erweitert werden oder ein eigens für dieses Verfahren konzipiertes Überwachungssystem kann als Produkt auf dem Markt kommen.

Darüber hinaus kann es vorgesehen sein, dass die Bewegungsfreiheit des Fensterbereichs durch externe Signale eingeschränkt wird. Für die Anpassung der Position und/oder der Abmessungen des Fensterbereichs können also Grenzen vorgegeben werden. Insbesondere zur Kollisionsvermeidung der weiteren Maschine mit der sicherheitskritischen Maschine kann diese Option eingesetzt werden.

Ferner kann durch eine geeignete Positionierung der nicht trennenden Schutzeinrichtungen erreicht werden, dass eine (oder mehrere, aber nicht alle) der nicht trennenden Schutzeinrichtungen bei Eindringen in den Übergangsbereich zuerst auslöst. Welche nicht trennende Schutzeinrichtung zuerst auslöst, ist gegebenenfalls abhängig von relativer Position und Winkel des in den Übergangsbereich eindringenden Objekts. Wenn die Auslösung als initialer Trigger zur Freigabe des Fensters verwendet wird, kann damit die Richtung bestimmt werden, aus welcher in den Übergangsbereich eingedrungen wird. Durch Einfügen von zufälligen, zwischen der weiteren Maschine und nicht trennenden Schutzeinrichtungen koordinierten Verschiebungen des Fensterbereichs in den Bewegungsablauf, kann ein Anlernen der Regelmäßigkeit in den Trajektorien durch Personen verhindert werden.

In einer weiteren Ausführungsform wird die Bewegung der Maschine unterbrochen, falls mittels einer der ersten nicht trennenden Schutzeinrichtungen und/oder einer der zweiten nicht trennenden Schutzeinrichtungen ein Teil der Maschine oder ein anderes Objekt in dem Übergangsbereich erfasst wird. Die sicherheitskritische Maschine darf nicht in dem Übergangsbereich operieren oder sich in diesen bewegen. Wenn sich die sicherheitskritische Maschine in den Übergangsbereich bewegt, kann dies mit den nicht trennenden Schutzeinrichtungen erfasst werden und die Bewegung der sicherheitskritischen Maschine gestoppt werden. Es kann auch vorgesehen sein, dass die Bewegung der weiteren Maschine gestoppt wird, falls sich die weitere Maschine außerhalb des Fensterbereichs in den Übergangsbereich bewegt. Sind die Positionsinformationen der Maschine bezogen auf den Überwachungsbereich im realen Prozess verfügbar, kann die Fenstertrajektorie durch eine parallel mitlaufende Berechnung bestimmt werden. Bei fehlerhaften oder nicht aktuellen Positionsinformationen stimmen Maschinenposition der weiteren Maschine und Fensterposition nicht überein und die nicht trennenden Schutzeinrichtungen lösen ihre Schutzfunktion aus. Dies ermöglicht einen sicheren Betrieb der Maschinen.

In einer weiteren Ausführungsform sind die ersten nicht trennenden Schutzeinrichtungen und die zweiten nicht trennenden Schutzeinrichtungen derart ausgestaltet, dass die ersten Überwachungsrichtungen senkrecht zu den zweiten Überwachungsrichtungen verlaufen. Hierbei können die ersten nicht trennenden Schutzeinrichtungen so zueinander angeordnet sein, dass die ersten Überwachungsrichtungen parallel zueinander sind. Auch die zweiten nicht trennenden Schutzeinrichtungen können so zueinander angeordnet sein, dass die zweiten Überwachungsrichtungen parallel zueinander sind. Insgesamt können somit zwei zueinander senkrechte Lichtvorhänge bereitgestellt werden.

Eine erfindungsgemäße Schutzvorrichtung dient zum Anpassen einer Schutzfunktion während eines Betriebs einer Maschine. Die Schutzvorrichtung umfasst eine Mehrzahl von nicht trennenden Schutzeinrichtung zum Überwachen eines Übergangsbereichs, wobei der Übergangsbereich zwischen einem Gefahrenbereich, in welchem mit der Maschine eine gefahrbringende Bewegung durchgeführt wird, und einem Umgebungsbereich angeordnet ist. Dabei umfasst die Schutzvorrichtung erste nicht trennende Schutzeinrichtungen zum Überwachen des Übergangsbereichs entlang von jeweiligen ersten Überwachungsrichtungen und zweite nicht trennende Schutzeinrichtungen zum unabhängigen Überwachen des Übergangsbereichs entlang von jeweiligen zweiten Überwachungsrichtungen, wobei zumindest eine der ersten nicht trennenden Schutzeinrichtungen und zumindest eine der zweiten nicht trennenden Schutzeinrichtungen derart zueinander angeordnet sind, dass die erste Überwachungsrichtung der zumindest einen ersten nicht trennenden Schutzeinrichtung und die zweite Überwachungsrichtung der zumindest einen zweiten nicht trennenden Schutzeinrichtung einen Schnittpunkt aufweisen.

Die Schutzvorrichtung kann eine Koordinationseinheit aufweisen, mittels welcher Daten von der weiteren Maschine empfangen werden können. Diese Daten können die Bewegung und/oder Position der weiteren Maschine beschreiben. Auf Grundlage dieser Daten können dann mittels der Koordinationseinheit die Position und/oder die Abmessungen für den Fensterbereich bestimmt werden. Zudem können die nicht trennenden Schutzeinrichtungen mittels der Koordinationseinheit angesteuert beziehungsweise aktiviert und/oder deaktiviert werden.

Die mit Bezug auf das erfindungsgemäße Verfahren vorgestellten bevorzugten Ausführungsformen und deren Vorteile gelten entsprechend für die erfindungsgemäße Schutzvorrichtung. Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Darstellung einer Maschine, einer weiteren Maschine sowie eines Übergangsbereichs zwischen einem Gefahrenbereich und einem Umgebungsbereich;
- FIG 2: eine Mehrzahl von ersten nicht trennenden Schutzeinrichtungen, mit denen der Übergangsbereich überwacht werden kann;
- FIG 3: die ersten nicht trennenden Schutzeinrichtungen gemäß FIG 2, wobei eine der Schutzeinrichtungen zum Erzeugen eines unüberwachten Bereichs deaktiviert ist;
- FIG 4: erste nicht trennenden Schutzeinrichtungen und zweite nicht trennenden Schutzeinrichtungen, wobei durch eine Deaktivierung einer ersten nicht trennenden Schutzeinrichtung und einer zweiten nicht trennenden Schutzeinrichtung ein unüberwachter Fensterbereich erzeugt wird;
- FIG 5: eine nicht sicherheitskritische Maschine mit einem Roboterarm, welcher durch den unüberwachten Fensterbereich hindurch bewegt wird; und
- FIG 6: eine schematische Darstellung einer Schutzvorrichtung zum Bereitstellen einer Schutzfunktion während des Betriebs der Maschine.

In den Figuren werden gleiche oder funktionsgleiche Elemente mit den gleichen Bezugszeichen versehen.

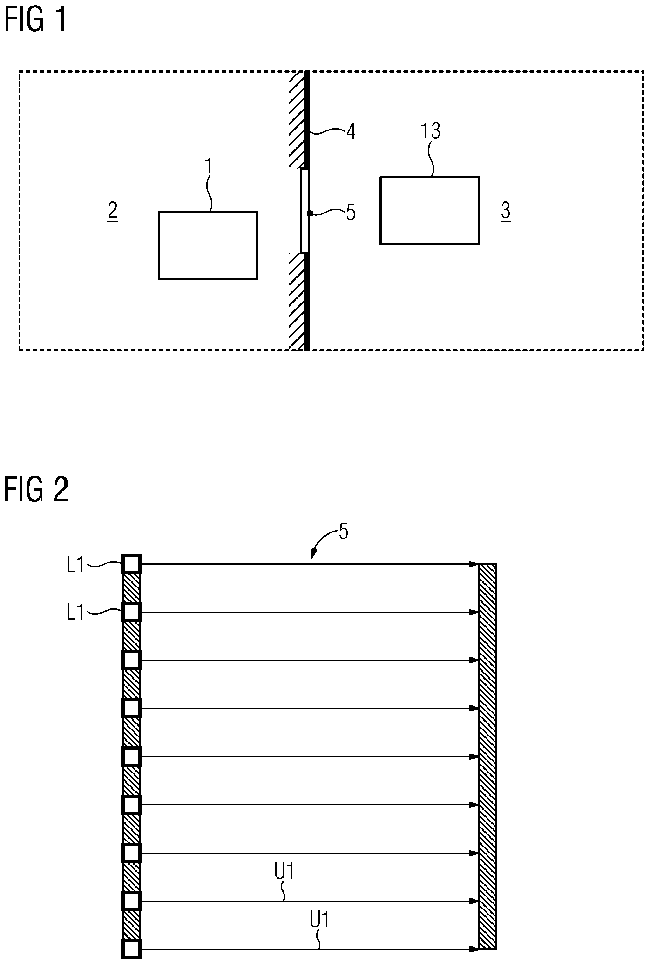

FIG 1 zeigt in einer schematischen Darstellung eine sicherheitskritische Maschine 1 sowie eine weitere, nicht sicherheitskritische Maschine 13. Im Betrieb der Maschine 1 bewegt sich die Maschine 1 oder ein Teil davon. In einem Gefahrenbereich 2 in der Maschine 1 und/oder ihrem Umkreis ist die Sicherheit oder die Gesundheit einer Person gefährdet. Der Gefahrenbereich 2 ist von einem Umgebungsbereich 3 durch eine trennende Schutzeinrichtung 4 getrennt. Die trennende Schutzeinrichtung 4 ist ein Maschinenteil, welches Schutz mittels einer physischen Barriere bietet. Die trennende Schutzeinrichtung 4 kann durch ein Gitter oder eine Tür bereitgestellt werden. Zudem ist ein überwachter Übergangsbereich 5 zwischen dem Umgebungsbereich 3 und dem Gefahrenbereich 2 vorhanden. Wie nachfolgend näher erläutert, wird dieser Übergangsbereich durch nicht trennende Schutzeinrichtungen L1, L2 überwacht. Vorliegend befindet sich die weitere, nicht sicherheitskritische Maschine 13 in dem Umgebungsbereich 3. Die weitere Maschine 13 kann sich auch in dem Gefahrenbereich 2 befinden.

FIG 2 zeigt eine Mehrzahl von ersten nicht trennenden Schutzeinrichtungen L1, mit denen der Übergangsbereich 5 überwacht werden kann. Die ersten nicht trennenden Schutzeinrichtungen L1 können als optische Sensoren nach Art einer Lichtschranke ausgebildet sein. Mit den jeweiligen ersten nicht trennenden Schutzeinrichtungen L1 kann eine Überwachung des Übergangsbereichs 5 entlang einer ersten Überwachungsrichtung U1 durchgeführt werden. In dem vorliegenden Beispiel sind die ersten nicht trennenden Schutzeinrichtungen L1 gleichmäßig beabstandet zueinander angeordnet. Zudem sind die ersten nicht trennenden Schutzeinrichtungen L1 so angeordnet, dass die jeweiligen Überwachungsrichtungen U1 parallel zueinander sind.

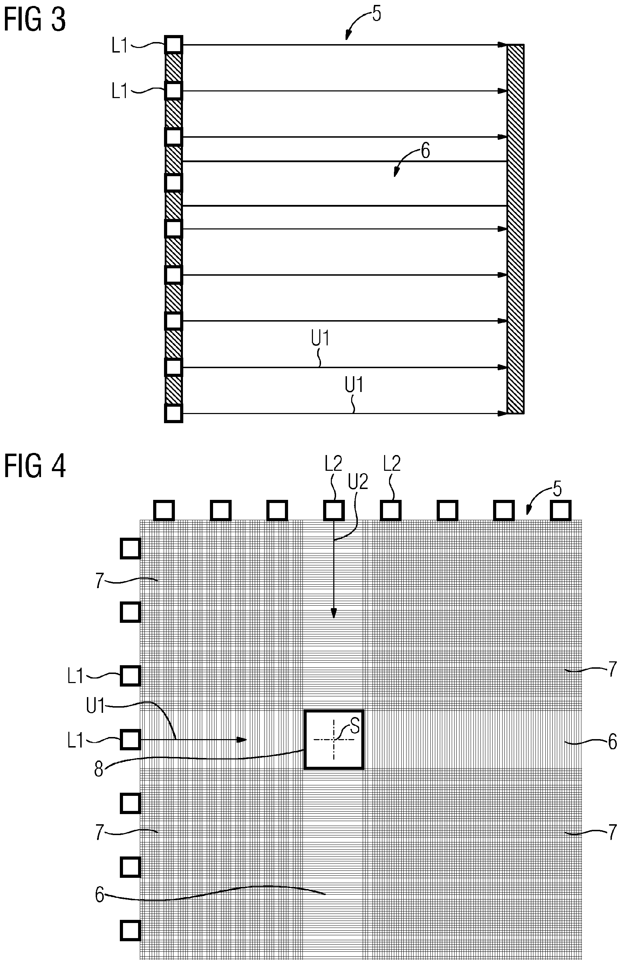

FIG 3 zeigt die Mehrzahl von ersten nicht trennenden Schutzeinrichtungen L1 gemäß FIG 2, wobei eine der ersten nicht trennenden Schutzeinrichtungen L1 deaktiviert ist. Hierdurch ergibt sich ein unüberwachter Bereich 6 in dem Übergangsbereich 5. Dies kann auch als Bereichsmuting bezeichnet werden.

FIG 4 zeigt eine Mehrzahl von ersten nicht trennenden Schutzeinrichtungen L1 und eine Mehrzahl von zweiten nicht trennenden Schutzeinrichtungen L2, wobei der Übergangsbereich 5 sowohl mit den ersten nicht trennenden Schutzeinrichtungen L1 als auch mit den zweiten nicht trennenden Schutzeinrichtungen L2 überwacht wird. Die ersten nicht trennenden Schutzeinrichtungen L1 sind so zueinander angeordnet, dass die ersten Überwachungsrichtungen U1 alle parallel zueinander sind. Auch die zweiten nicht trennenden Schutzeinrichtungen L2 sind so zueinander angeordnet, dass die zweiten Überwachungsrichtungen U2 alle parallel zueinander sind. Ferner sind die ersten nicht trennenden Schutzeinrichtungen L1 so zu den zweiten nicht trennenden Schutzeinrichtungen L2 angeordnet, dass die ersten Überwachungsrichtungen U1 jeweils senkrecht zu den zweiten Überwachungsrichtungen U2 verlaufen. Hierdurch ergeben sich in dem Überwachungsbereich 5 mehrfach überwachte Teilbereiche 7, die sowohl mit einer ersten nicht trennenden Schutzeinrichtungen L1 als auch mit einer zweiten nicht trennenden Schutzeinrichtungen L2 überwacht werden.

Dabei ist eine der ersten nicht trennenden Schutzeinrichtungen L1 deaktiviert. Hierdurch ergibt sich entlang der ersten Überwachungsrichtung U1 ein einfach überwachter Bereich 6, in welchem die Überwachung nur durch die zweiten nicht trennenden Schutzeinrichtungen L2 erfolgt. Außerdem ist eine der zweiten nicht trennenden Schutzeinrichtungen L2 deaktiviert.

Hierdurch ergibt sich entlang der zweiten Überwachungsrichtung U2 ein einfach überwachter Bereich 6, in welchem die Überwachung nur durch die ersten nicht trennenden Schutzeinrichtungen L1 erfolgt. Im Bereich eines Schnittpunkts S der ersten Überwachungsrichtung U1 der deaktivierten ersten nicht trennenden Schutzeinrichtung L1 und der zweiten Überwachungsrichtung U2 der deaktivierten zweiten nicht trennenden Schutzeinrichtung L2 ergibt sich ein unüberwachter Fensterbereich 8. In dem Fensterbereich 8 erfolgt also weder eine Überwachung durch eine erste nicht trennende Schutzeinrichtung L1 noch durch eine zweite nicht trennende Schutzeinrichtung L2.

Das Beispiel von FIG 4 zeigt einen zweidimensionalen Übergangsbereich 5, welcher von zwei orthogonal angeordneten Lichtvorhängen überwacht wird. Dabei wird der eine Lichtvorhang durch die ersten nicht trennenden Schutzeinrichtungen L1 gebildet und der andere Lichtvorhang wird durch die zweiten nicht trennenden Schutzeinrichtungen L2 gebildet. In diesem Fall nimmt der Fensterbereich 8 die Form eines Rechtecks an (und ist eben). Die Größe des Fensterbereichs 8 wird durch die Überschneidung der jeweils einfach überwachten Bereiche 6 festgelegt. Durch die Ansteuerung der nicht trennenden Schutzeinrichtung L1, L2 können die Position und die Abmessungen des Fensterbereichs 8 angepasst werden.

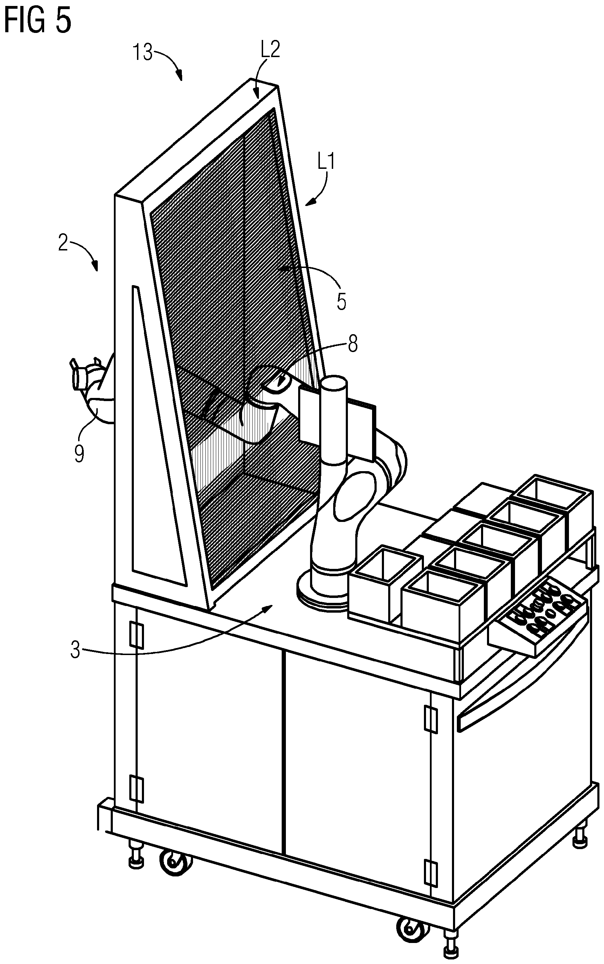

FIG 5 zeigt eine weitere, nicht sicherheitskritische Maschine 1, welche als bewegliches Teil einen Roboterarm 9 aufweist. Auch hier wird ein Lichtvorhang durch erste nicht trennende Schutzeinrichtungen L1 und zweite nicht trennende Schutzeinrichtungen L2 aufgespannt. Zudem wird der unüberwachte Fensterbereich 8 erzeugt. In diesem Fall werden die Position und/oder die Abmessungen des Fensterbereichs 8 an die Bewegung der weiteren Maschine 13 beziehungsweise des Roboterarms 9 angepasst. Auf diese Weise kann die Bewegung des Roboterarms 9 durch den Übergangsbereich 5 hindurch ermöglicht werden, ohne dass eine der nicht trennenden Schutzeinrichtungen L1, L2 auslöst und damit die Bewegung der Maschine 1 gestoppt wird.

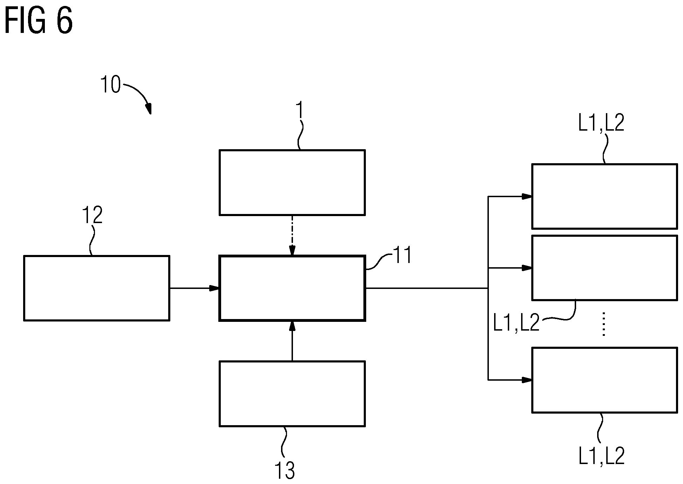

FIG 6 zeigt eine schematische Darstellung einer Schutzvorrichtung 10 zum Bereitstellen der Schutzfunktion im Betrieb der Maschine 1. Die Schutzvorrichtung 10 umfasst eine Koordinationseinheit 11. Die Koordinationseinheit 11 empfängt Daten von der weiteren Maschine 13, die eine nicht sicherheitskritische Maschine ist. Diese Daten beschreiben die Position und/oder die Bewegung der weiteren Maschine 13. Beispielsweise können Daten eine Trajektorie für die Bewegung der weiteren Maschine 13 beschreiben. Diese Daten können mittels der Koordinationseinheit 11 gegebenenfalls noch bezüglich des Koordinatensystems des Übergangsbereichs 5 transformiert werden. Die weitere Maschine 13 kann auch alternativ eine gewählte Trajektorie entsprechend der auszuführenden Operation an die Koordinationseinheit 11 übertragen. Zudem kann die Koordinationseinheit 11 statische Daten 12 empfangen. Für eine gewählte (Maschinen-)Trajektorie befindet sich die zugehörige Fenstertrajektorie, welche die Position des Fensterbereichs 8 beschreibt, in den statischen Daten. Hierdurch kann eine zeitsynchrone Auswertung und/oder Ausführung ermöglicht werden und die Position und/oder die Abmessungen des Fensterbereichs 8 an die Bewegung der weiteren Maschine 13 angepasst werden. Zudem kann die Koordinationseinheit 11 Daten der Maschine 1, welche eine sicherheitskritische Maschine ist, im Gefahrenbereich 2 empfangen. Somit kann die Bewegung der Maschine 1 berücksichtigt werden. Hiermit kann die Position der sicherheitskritischen Maschine 1 für eine Kollisionsvermeidung mit herangezogen werden. Basierend auf den empfangen Daten berechnet die Koordinationseinheit 11 die Bereiche 6 der nicht trennenden Schutzeinrichtungen L1, L2 in denen das Bereichsmuting zu aktivieren ist.

### Bezugszeichenliste

- 1: Maschine
- 2: Gefahrenbereich
- 3: Umgebungsbereich
- 4: trennende Schutzeinrichtung
- 5: Übergangsbereich
- 6: einfach überwachter Bereich
- 7: mehrfach überwachter Teilbereich
- 8: unüberwachter Fensterbereich
- 9: Roboterarm
- 10: Schutzvorrichtung
- 11: Koordinationseinheit
- 12: statische Daten
- 13: weitere, nicht sicherheitskritische Maschine

- L1: erste nicht trennende Schutzeinrichtung
- L2: zweite nicht trennende Schutzeinrichtung
- S: Schnittpunkt
- U1: erste Überwachungsrichtung
- U2: zweite Überwachungsrichtung

## Patentansprüche

1. Verfahren zum Anpassen einer Schutzfunktion während eines Betriebs einer Maschine (1), bei welchem mit einer Mehrzahl von nicht trennenden Schutzeinrichtungen (L1, L2) ein Übergangsbereich (5) überwacht wird, wobei der Übergangsbereich (5) zwischen einem Gefahrenbereich (2), in welchem mit der Maschine (1) eine gefahrbringende Bewegung durchgeführt wird, und einem Umgebungsbereich (3) angeordnet ist, wobei der Übergangsbereich (5) mit ersten nicht trennenden Schutzeinrichtungen (L1) entlang von jeweiligen ersten Überwachungsrichtungen (U1) und unabhängig davon mit zweiten nicht trennenden Schutzeinrichtungen (L2) entlang von jeweiligen zweiten Überwachungsrichtungen (U2) überwacht wird, wobei zumindest eine der ersten nicht trennenden Schutzeinrichtungen (L1) und zumindest eine der zweiten nicht trennenden Schutzeinrichtungen (L2) derart zueinander angeordnet werden, dass die erste Überwachungsrichtung (U1) der zumindest einen ersten nicht trennenden Schutzeinrichtung (L1) und die zweite Überwachungsrichtung (U2) der zumindest einen zweiten nicht trennenden Schutzeinrichtung (L2) einen Schnittpunkt (S) aufweisen,
**dadurch gekennzeichnet, dass**
eine Mehrzahl der ersten nicht trennenden Schutzeinrichtungen (L1) und eine Mehrzahl der zweiten nicht trennenden Schutzeinrichtungen (L2) derart zueinander angeordnet werden, dass die ersten Überwachungsrichtungen (U1) der ersten nicht trennenden Schutzeinrichtungen (L1) und die zweiten Überwachungsrichtungen (U2) der zweiten nicht trennenden Schutzeinrichtungen (L2) jeweilige Schnittpunkte (S) aufweisen,
wobei durch ein Deaktivieren und/oder Aktivieren der jeweiligen ersten nicht trennenden Schutzeinrichtungen (L1) und der jeweiligen zweiten nicht trennenden Schutzeinrichtungen (L2) eine Position und/oder Abmessungen eines den Schnittpunkten (S) zugeordneten, unüberwachten Fensterbereichs (8) angepasst werden.

2. Verfahren nach Anspruch 1, **dadurch gekennzeichnet, dass** die zumindest eine erste nicht trennende Schutzeinrichtung (L1) und die zumindest eine zweite nicht trennenden Schutzeinrichtung (L2) zum Erzeugen eines dem Schnittpunkt (S) zugeordneten, unüberwachten Fensterbereichs (8) deaktiviert werden.

3. Verfahren nach Anspruch 1, **dadurch gekennzeichnet, dass** eine Bewegung einer weiteren, nicht sicherheitskritischen Maschine (13) bestimmt wird und die Position und/oder die Abmessungen des unüberwachten Fensterbereichs (8) fortlaufend in Abhängigkeit von der Bewegung angepasst werden.

4. Verfahren nach Anspruch 3, **dadurch gekennzeichnet, dass** die Position und/oder die Abmessungen des unüberwachten Fensterbereichs (8) derart bestimmt werden, dass ein Operieren der weiteren Maschine (13) durch den Übergangsbereich (5) ermöglicht ist.

5. Verfahren nach Anspruch 3 oder 4, **dadurch gekennzeichnet, dass** zum Bestimmen der Bewegung der weiteren Maschine (13) eine Trajektorie berechnet wird und/oder Bewegungsdaten, welche die Bewegung der weiteren Maschine (13) beschreiben, von der weiteren Maschine (13) bereitgestellt werden.

6. Verfahren nach einem der Ansprüche 3 bis 5, **dadurch gekennzeichnet, dass** zum Bestimmen der Bewegung der weiteren Maschine (13) die Bewegung der weiteren Maschine (13) während einer initialen Lernphase mittels der ersten nicht trennenden Schutzeinrichtung (L1) und/oder der zweiten nicht trennenden Schutzeinrichtung (L2) beobachtet wird.

7. Verfahren nach einem der vorhergehenden Ansprüche, **dadurch gekennzeichnet, dass** die Bewegung der Maschine (1) unterbrochen wird, falls mittels der ersten nicht trennenden Schutzeinrichtung (L1) und/oder der zweiten nicht trennenden Schutzeinrichtung (L2) ein Teil der Maschine (1) oder ein anderes Objekt in dem Übergangsbereich (5) erfasst wird.

8. Verfahren nach einem der vorhergehenden Ansprüche, **dadurch gekennzeichnet, dass** die ersten nicht trennenden Schutzeinrichtungen (L1) und die zweiten nicht trennenden Schutzeinrichtungen (L2) derart ausgestaltet sind, dass die ersten Überwachungsrichtungen (U1) senkrecht zu den zweiten Überwachungsrichtungen (U2) verlaufen.

9. Schutzvorrichtung (10) zum Anpassen einer Schutzfunktion während eines Betriebs einer Maschine (1), mit einer Mehrzahl von nicht trennenden Schutzeinrichtungen (L1, L2) zum Überwachen eines Übergangsbereichs (5), wobei der Übergangsbereich (5) zwischen einem Gefahrenbereich (2), in welchem mit der Maschine (1) eine gefahrbringende Bewegung durchgeführt wird, und einem Umgebungsbereich (3) angeordnet ist,
wobei die Schutzvorrichtung (10) erste nicht trennende Schutzeinrichtungen (L1) zum Überwachen des Übergangsbereichs (5) entlang von jeweiligen ersten Überwachungsrichtungen (U1) und zweite nicht trennende Schutzeinrichtungen (L2) zum unabhängigen Überwachen des Übergangsbereichs (5) entlang von jeweiligen zweiten Überwachungsrichtungen (U1) aufweist, wobei zumindest eine der ersten nicht trennenden Schutzeinrichtungen (L1) und zumindest eine der zweiten nicht trennenden Schutzeinrichtungen (L2) derart zueinander angeordnet sind, dass die erste Überwachungsrichtung (U1) der zumindest einen ersten nicht trennenden Schutzeinrichtung (L1) und die zweite Überwachungsrichtung (U2) der zumindest einen zweiten nicht trennenden Schutzeinrichtung (L2) einen Schnittpunkt (S) aufweisen,
**dadurch gekennzeichnet, dass**
eine Mehrzahl der ersten nicht trennenden Schutzeinrichtungen (L1) und eine Mehrzahl der zweiten nicht trennenden Schutzeinrichtungen (L2) derart zueinander angeordnet sind, dass die ersten Überwachungsrichtungen (U1) der ersten nicht trennenden Schutzeinrichtungen (L1) und die zweiten Überwachungsrichtungen (U2) der zweiten nicht trennenden Schutzeinrichtungen (L2) jeweilige Schnittpunkte (S) aufweisen,
wobei durch ein Deaktivieren und/oder Aktivieren der jeweiligen ersten nicht trennenden Schutzeinrichtungen (L1) und der jeweiligen zweiten nicht trennenden Schutzeinrichtungen (L2) eine Position und/oder Abmessungen eines den Schnittpunkten (S) zugeordneten, unüberwachten Fensterbereichs (8) angepasst werden.

## Claims

1. Method for adjusting a protective function during operation of a machine (1), in which a transition region (5) is monitored by means of a plurality of non-separating protective devices (L1, L2), wherein the transition region (5) is arranged between a danger area (2) in which a dangerous movement is performed with the machine (1) and a surrounding area (3), wherein the transition region (5) is monitored with first non-separating protective devices (L1) along respective first monitoring directions (U1) and, independently therefrom, with second non-separating protective devices (L2) along respective second monitoring directions (U2), wherein at least one of the first non-separating protective devices (L1) and at least one of the second non-separating protective devices (L2) are arranged relative to one another in such a way that the first monitoring direction (U1) of the at least one first non-separating protective device (L1) and the second monitoring direction (U2) of the at least one second non-separating protective device (L2) have a point of intersection (S),
**characterized in that**
a plurality of the first non-separating protective devices (L1) and a plurality of the second non-separating protective devices (L2) are arranged relative to one another in such a way that the first monitoring directions (U1) of the first non-separating protective devices (L1) and the second monitoring directions (U2) of the second non-separating protective devices (L2) have respective points of intersection (S),
wherein a position and/or dimensions of an unmonitored window region (8) assigned to the points of intersection (S) is/are adjusted through a deactivation and/or activation of the respective first non-separating protective devices (L1) and the respective second non-separating protective devices (L2).

2. Method according to Claim 1, **characterized in that** the at least one first non-separating protective device (L1) and the at least one second non-separating protective device (L2) are deactivated to generate an unmonitored window region (8) assigned to the point of intersection (S).

3. Method according to Claim 1, **characterized in that** a movement of a further, non-safety-critical machine (13) is determined and the position and/or the dimensions of the unmonitored window region (8) is/are adjusted continuously depending on the movement.

4. Method according to Claim 3, **characterized in that** the position and/or the dimensions of the unmonitored window region (8) is/are determined in such a way that an operation of the further machine (13) through the transition region (5) is enabled.

5. Method according to Claim 3 or 4, **characterized in that**, in order to determine the movement of the further machine (13), a trajectory is calculated and/or movement data which describe the movement of the further machine (13) are provided by the further machine (13).

6. Method according to one of Claims 3 to 5, **characterized in that**, in order to determine the movement of the further machine (13), the movement of the further machine (13) is observed during an initial learning phase by means of the first non-separating protective device (L1) and/or the second non-separating protective device (L2).

7. Method according to one of the preceding claims, **characterized in that** the movement of the machine (1) is interrupted if a part of the machine (1) or a different object is detected in the transition region (5) by means of the first non-separating protective device (L1) and/or the second non-separating protective device (L2).

8. Method according to one of the preceding claims, **characterized in that** the first non-separating protective devices (L1) and the second non-separating protective devices (L2) are designed in such a way that the first monitoring directions (U1) run perpendicular to the second monitoring directions (U2).

9. Protective apparatus (10) for adjusting a protective function during operation of a machine (1), having a plurality of non-separating protective devices (L1, L2) for monitoring a transition region (5), wherein the transition region (5) is arranged between a danger area (2) in which a dangerous movement is performed with the machine (1) and a surrounding area (3), wherein the protective apparatus (10) comprises first non-separating protective devices (L1) to monitor the transition region (5) along respective first monitoring directions (U1) and second non-separating protective devices (L2) for the independent monitoring of the transition region (5) along respective second monitoring directions (Ul), wherein at least one of the first non-separating protective devices (L1) and at least one of the second non-separating protective devices (L2) are arranged relative to one another in such a way that the first monitoring direction (U1) of the at least one first non-separating protective device (L1) and the second monitoring direction (U2) of the at least one second non-separating protective device (L2) have a point of intersection (S),
**characterized in that**
a plurality of the first non-separating protective devices (L1) and a plurality of the second non-separating protective devices (L2) are arranged relative to one another in such a way that the first monitoring directions (U1) of the first non-separating protective devices (L1) and the second monitoring directions (U2) of the second non-separating protective devices (L2) have respective points of intersection (S),
wherein a position and/or dimensions of an unmonitored window region (8) assigned to the points of intersection (S) is/are adjusted through a deactivation and/or activation of the respective first non-separating protective devices (L1) and the respective second non-separating protective devices (L2).

## Revendications

1. Procédé d'adaptation d'une fonction de protection pendant le fonctionnement d'une machine (1), dans lequel on contrôle une zone (5) de transition par une pluralité de dispositifs (L1, L2) de protection non découplés, dans lequel la zone (5) de transition est disposée entre une zone (2) de danger, dans laquelle il est effectué, par la machine (1), un mouvement apportant du danger, et une zone (3) ambiante, dans lequel on contrôle la zone (5) de transition par de premiers dispositifs (L1) de protection non découplés le long de premières directions (U1) de contrôle respectives et, indépendamment de cela, par des deuxièmes dispositifs (L2) de protection non découplés le long de respectivement des deuxièmes directions (U2) de contrôle, dans lequel au moins l'un des premiers dispositifs (L1) de protection non découplés et au moins l'un des deuxièmes dispositifs (L2) de protection non découplés sont disposés l'un par rapport à l'autre, de manière à ce que la première direction (U1) de contrôle du au moins un premier dispositif (L1) de protection non découplé et la deuxième direction (U2) de contrôle du au moins un deuxième dispositif (L2) de protection non découplé aient un point (S) d'intersection, **caractérisé en ce que**
l'on dispose une pluralité des premiers dispositifs (L1) de protection non découplés et une pluralité des deuxièmes dispositifs (L2) de protection non découplés les uns par rapport aux autres, de manière à ce que les premières directions (U1) de contrôle des premiers dispositifs (L1) de protection non découplés et les deuxièmes directions (U2) de contrôle des deuxièmes dispositifs (L2) de protection non découplés aient des points (S) d'intersection respectifs,
dans lequel, par une désactivation et/ou une activation des premiers dispositifs (L1) de protection non découplés et des deuxièmes dispositifs (L2) de protection non découplés, on adapte une position et/ou des dimensions d'une zone (8) de fenêtre non contrôlée, associée aux points (S) d'intersection.

2. Procédé suivant la revendication 1, **caractérisé en ce que** l'on désactive le au moins un premier dispositif (L1) de protection non découplé et le au moins un deuxième dispositif (L2) de protection non découplé, pour la production d'une zone (8) de fenêtre non surveillée associée au point (S) d'intersection.

3. Procédé suivant la revendication 1, **caractérisé en ce que** l'on détermine un mouvement d'une autre machine (13), qui n'est critique du point de vue de la sécurité, et on adapte la position et/ou les dimensions de la zone (8) de fenêtre non surveillée en continu en fonction du mouvement.

4. Procédé suivant la revendication 3, **caractérisé en ce que** l'on détermine la position et/ou les dimensions de la zone (8) de fenêtre non surveillée, de manière à rendre possible une intervention de l'autre machine (13) par la zone (5) de transition.

5. Procédé suivant la revendication 3 ou 4, **caractérisé en ce que**, pour la détermination du mouvement de l'autre machine (13), on calcule une trajectoire et/ou on se procure des données de mouvement par l'autre machine (13), qui décrivent le mouvement de l'autre machine (13).

6. Procédé suivant l'une des revendications 3 à 5, **caractérisé en ce que**, pour la détermination du mouvement de l'autre machine (13), on observe le mouvement de l'autre machine (13) pendant une phase d'apprentissage initiale au moyen du premier dispositif (L1) de protection non découplés et/ou du deuxième dispositif (L2) de protection non découplé.

7. Procédé suivant l'une des revendications précédentes, **caractérisé en ce que** l'on interrompt le mouvement de la machine (1), si l'on détecte, au moyen du premier dispositif (L1) de protection non découplés et/ou du deuxième dispositif (L2) de protection non découplé, une partie de la machine (1) ou un autre objet dans la zone (5) de transition.

8. Procédé suivant l'une des revendications précédentes, **caractérisé en ce que** les premiers dispositifs (L1) de protection non découplés et les deuxièmes dispositifs (L2) de protection non découplés sont conformés de manière à ce que les premières directions (U1) de contrôle soient perpendiculaires aux deuxièmes directions (U2) de contrôle.

9. Installation (10) de protection pour l'adaptation d'une fonction de protection pendant le fonctionnement d'une machine (1), comprenant une pluralité de dispositifs (L1, L2) de protection non découplés pour le contrôle d'une zone (5) de transition, dans lequel la zone (5) de transition est disposée entre une zone (2) de danger, dans laquelle il est effectué, par la machine (1), un mouvement apportant du danger, et une zone (3) ambiante,
dans lequel l'installation (10) de protection a des premiers dispositifs (L1) de protection non découplés pour le contrôle de la zone (5) de transition, le long de premières directions (U1) de contrôle et des deuxièmes dispositifs (L2) de protection non découplés pour le contrôle, indépendamment de la zone (5) de transition le long de deuxièmes directions (U1) de contrôle, dans lequel au moins l'un des premiers dispositifs (L1) de protection non découplés et au moins l'un des deuxièmes dispositifs (L2) de protection non découplés sont disposés l'un par rapport à l'autre, de manière à ce que la première direction (U1) de contrôle du au moins un premier dispositif (L1) de protection non découplé et la deuxième direction (U2) de contrôle du au moins un deuxième dispositif (L2) de protection non découplé, aient un point (S) d'intersection,
**caractérisé**
**en ce qu'**une pluralité des premiers dispositifs (L1) de protection non découplés et une pluralité des deuxièmes dispositifs (L2) de protection non découplés sont disposés les uns par rapport aux autres, de manière à ce que les premières directions (U1) de contrôle des premiers dispositifs (L1) de protection non découplés et les deuxièmes directions (U2) de contrôle des deuxièmes dispositifs (L2) de protection non découplés aient respectivement des points (S) d'intersection,
dans lequel, par une désactivation et/ou une activation des premiers dispositifs (L1) de protection non découplés et des deuxièmes dispositifs (L2) de protection non découplés, on adapte une position et/ou des dimensions d'une zone (8) de fenêtre non contrôlée, associée aux points (S) d'intersection.
